# EUROPEAN PATENT SPECIFICATION

(11) **EP 1 492 617 B1**
(45) Date of publication and mention of the grant of the patent: **12.05.2010**
(21) Application number: 03723095.0
(22) Date of filing: 25.03.2003
(51) Int. Cl.: B01J 8/02

(54) **REACTION APPARATUS WITH A HEAT-EXCHANGER**
REAKTIONSAPPARATUR MIT WÄRMETAUSCHER
APPAREIL DE REACTION AVEC CHANGEUR THERMIQUE

(30) Priority: 26.03.2002 JP 2002085149
(43) Date of publication of application: 05.01.2005
(73) Proprietor: Showa Denko K.K., Tokyo 105-8518 (JP)
(72) Inventor: HOTTA, M., Showa Denko KK, Kawasaki-shi, Kanagawa 210-0867 (JP); ATOBE, Hitoshi, Showa Denko KK, Kawasaki-shi, Kanagawa 210-0867 (JP)
(74) Representative: Strehl Schübel-Hopf & Partner
(86) International application number: PCT/JP2003/003591
(87) International publication number: WO 2003/080230

(56) References cited:
- WO-A-01/91894
- BE-A- 499 694
- DE-A- 1 426 731
- DE-C- 820 894
- GB-A- 797 574
- GB-A- 1 065 044
- US-A- 3 212 862
- US-A- 3 424 553
- US-A- 5 658 538
- US-A- 6 146 606
- US-B1- 6 221 117

## Description

### TECHNICAL FIELD

The present invention relates to a reaction apparatus and a reaction method using the apparatus. More specifically, the present invention relates to a heat exchanger-integrated reaction apparatus and a reaction method using the apparatus
where the reaction is performed with solid catalyst or solid reactive agent at high temperature.

### BACKGROUND ART

Known examples of the conventional apparatus where a heat exchanger and a catalytic reactor are integrated include:
(1) a high-temperature catalytic apparatus described in JP-A-64-51126 (the term "JP-A" as used herein means an "unexamined published Japanese patent application"), and
(2) a catalytic oxidation apparatus described in JP-A-54-126671, where a catalyst is coated on a honeycomb structure.

In the case of the high-temperature catalytic apparatus of (1), the apparatus itself may be made relatively compact but since the gases before and after treatment use separate flow-paths, a plurality of pipes are necessary for gas and the apparatus requires a space in the periphery. Furthermore, the treated gas after passing through the catalyst layer filled in the reactor comes into contact with the connection part of the reactor and the heat exchanger before it passes through the heat exchanger and the connection part may be heated to a high temperature, therefore, a material having high resistance against heat must be selected for the construction material of a packing or the like for sealing the connection part and the heat exchanger. In addition, the high-temperature catalytic apparatus of (1) has a problem that the flange part is baked.

In the case of the catalytic oxidation apparatus of (2)
where a catalyst is coated on a honeycomb structure, the heat efficiency is improved because the heat-exchanging portion is covered with a catalyst, but the apparatus as a whole must be disassembled at the time of exchanging the catalyst and this raises a problem in view of cost and maintenance.

Furthermore, when a heater such as electric furnace is used for the heat source, the layer filled with catalyst or reactive agent undergoes a phenomenon that a temperature distribution arises in the treated gas flow direction. Even if a preheater is provided, it is difficult to improve this phenomenon and efficiently eliminate the temperature distribution, and in many cases, the catalyst or reactive agent filled in the reactor cannot be effectively used.

US 3,212,862 discloses an apparatus for exothermic catalytic reactions in which a gaseous reaction mixture is passed through a stationary catalyst bed while in parallel or cocurrent flow with unreacted gas mixture which is flowing through specifically designed cooling tubes disposed in the catalyst bed.

GB 1,065,044 discloses a catalytic reactor for exothermal reactions comprising a vessel having at least two catalyst beds mounted therein one above the other, a lower indirect heat-exchange section from which a central onduit for incoming gases extends upwardly to above the uppermost catalyst bed, a gas baffle mounted between a pair of beds to provide an annular opening about the central conduit, a cold gas duct which is co-axial and external of the conduit an terminates at the annular opening, and means for passing the gases leaving the lowermost bed through the indirect heat exchange section.

### DISCLOSURE OF INVENTION

Under these circumstances, an object of the present invention is to provide a compact heat exchanger-integrated reaction apparatus where the temperature distribution of the reactor can be kept uniform in the gas flow direction, the heat energy recovery efficiency can be improved, the flange part in the apparatus can be prevented from overheating and a sealing material composed of a normal low-temperature construction material can be used for the flange, and also provide a reaction method using the apparatus.

As a result of extensive investigations to attain the above-described object, the present inventors have found that the object can be attained by using a reaction apparatus comprising a heat exchanger and a reactor on which a heater is present, which are enclosed in an outer casing, the top of the heat exchanger being connected to the reactor, the other end part (the lower end) of the heat exchanger and the bottom of the outer casing being fixed by a flange, and a double piping for introducing a gas to be treated and discharging the treated gas being connected to the lower end part of the heat exchanger. The present invention has been accomplished based on this finding.

Specifically, the present invention relates to the following reaction apparatus and reaction method.
1. A reaction apparatus comprising a heat exchanger and a reactor on which a heater is present, which are enclosed in an outer casing, the top of the heat exchanger being connected to the reactor, the other end part of the heat exchanger and the bottom of the outer casing being fixed to each other by a flange, and a double piping for introducing a gas to be treated and discharging the treated gas being connected to the other end part of the heat exchanger, such that the gas passes through the heat exchanger, the reactor and the heat exchanger in this order during the process from introducing gas through one of the inner tube and the outer tube in the double piping to discharging the gas through the other tube.
2. The reaction apparatus as described in 1 above, wherein the heat exchanger is a shell and tube-type heat exchanger.
3. The reaction apparatus as described in 1 above, wherein the outer casing has an eyebolt fixing part on the ceiling part, thereby the outer casing is detachable.
4. The reaction apparatus as described in 1 above, wherein the reactor has fins in the inside thereof.
5. The reaction apparatus as described in 1 above, wherein the fins are provided inside the inner tube in the double piping and/or between the inner tube and the outer tube in the double piping.
6. The reaction apparatus as described in 1 above, comprising a mechanism where the gas to be treated is introduced through the inner tube and discharged through the outer tube.
7. The reaction apparatus as described in 6 above, wherein the outer tube of the double piping has a heat radiating plate.
8. A reaction method comprising passing a gas to be treated sequentially into one tube of the inner tube and the outer tube in a double piping, a heat exchanger, a reactor with a heater, the heat exchanger and the other tube in the double piping in this order, and heating the gas to be treated by the heater before the gas to be treated is introduced into the reactor, thereby adjusting the temperature difference in the gas flow direction inside the reactor.
9. The reaction method as described in 8 above, wherein the gas to be treated is introduced through the inner tube of the double piping and discharged through the outer tube.

### BRIEF DESCRIPTION OF DRAWINGS

Fig. 1(A) is a schematic longitudinal sectional view showing one example of the heat exchanger-integrated reaction apparatus of the present invention, and Fig. 1(B) is a schematic cross-sectional view showing one example of the apparatus of the present invention.
Fig. 2 is a schematic view showing one example of the conventional reaction apparatus using an externally heating system.
Fig. 3 is a graph showing one example of the temperature distribution of the heat exchanger-integrated reaction apparatus of the present invention when the flow rate of gas is changed.
Fig. 4 is a graph showing one example of the temperature distribution of the heat exchanger-integrated reaction apparatus of the present invention when the set temperature is changed.
Fig. 5 is a graph showing one example of the temperature distribution of the reactive agent or catalyst in the conventional reaction apparatus using an externally heating system.

### DETAILED DESCRIPTION OF THE INVENTION

The reaction apparatus and reaction method of the present invention are described in detail below.

The reaction apparatus of the present invention comprises a heat exchanger 5 and a reactor 1 on which a heater 2 is present, which are enclosed in an outer casing 6, and in this reaction apparatus, one end part (typically, the top end part) of the heat exchanger 5 is connected to the reactor 1, the other end part (typically, the lower end part) of the heat exchanger 5 and one end part (typically, the lower end part) of the outer casing 6 are fixed by a flange 4, and a double piping 7 for introducing a gas to be treated and discharging the treated gas is connected to the end part (typically, the lower end part) of the heat exchanger 5.

The reaction apparatus of the present invention can be used, for example, in a reaction using solid reactive agent or solid catalyst for decomposition-treating a dry etching or cleaning gas discharged in the process of producing a semiconductor device, a liquid crystal display device or the like. Also, the reaction apparatus of the present invention can be used in a reaction using solid catalyst for decomposing and thereby removing nitrous oxide contained in a purge gas line for cabinet or in a waste anesthetic gas discharged from an operating room.

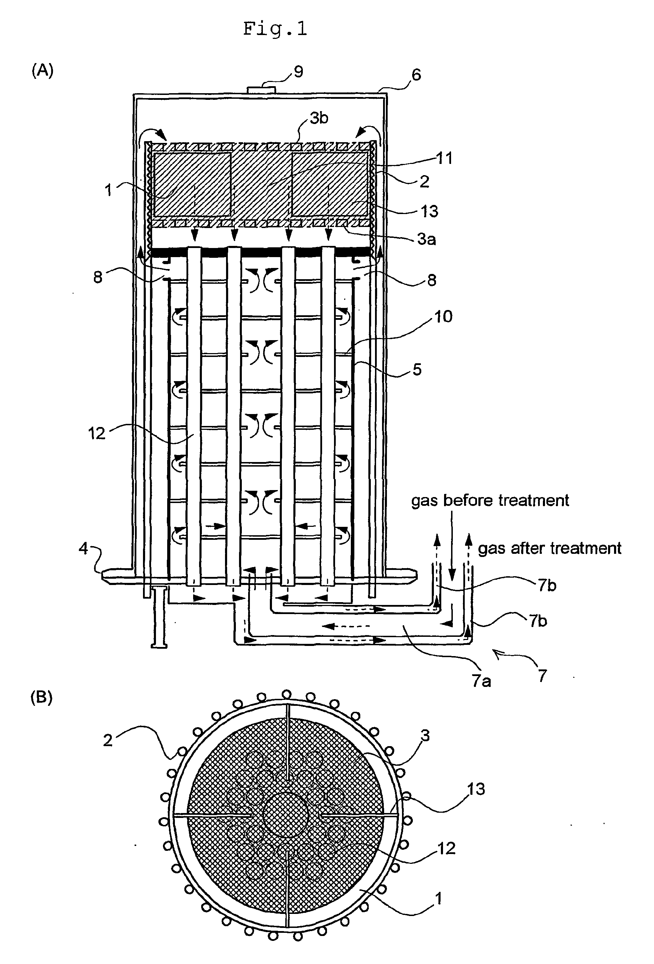

Fig. 1(A) is a schematic longitudinal sectional view showing one example of the heat exchanger-integrated reaction apparatus of the present invention, and Fig. 1(B) is a schematic cross-sectional view thereof. Fig. 1 shows one example of the heat exchanger-integrated reaction apparatus of the present invention in vertical orientation,
where the top of the heat exchanger 5 is connected to the reactor 1, the lower end part of the heat exchanger 5 and the bottom of the outer casing 6 being fixed by a flange 4.

The reaction apparatus shown in Fig. 1 comprises a reactor 1 consisting of side walls which a heater 2 contacts and a punching metal plate 3 on which catalyst is placed, and shell and tube-type heat exchanger 5 which is connected to the lower end of the reactor.

The bottom part of an outer casing 6 and the lower end part of the heat-exchanger are fixed to each other by a flange 4.

The shell and tube-type heat exchanger 5 means a heat exchanger where a large number of small caliber straight pipes (tube 12) are fixed by inserting their both ends into two disks and housed in one shell, and this heat exchanger is characterized in that a wide heat transfer surface can be housed in a small volume. To the disk surface at the bottom part of the heat exchanger is connected a double piping 7 which consists of an inner tube 7a for the gas before treatment to be introduced through into the heat-exchanger and an outer tube 7b for the gas after treatment to be discharged through out of the system.

The ceiling and side wall parts of the outer casing 6 are integrally formed, or the outer casing has a integrated structure where the ceiling and side wall parts are integrally joined. The outer casing has an eyebolt fixing part 9 on the ceiling part, thereby the outer casing 6 can be detached from the heat-exchanger 5 and the reactor 1 which the outer casing 6 covers, and solid reactive agents or catalysts can be easily exchanged smoothly.

In the reaction apparatus of the present invention, as a heat exchanger, although a normal type where gases flowing in countercurrent exchange heat may be used, a shell-and-tube heat exchanger is more preferably used.

In the reaction apparatus shown in Fig. 1, in a double piping 7 consisting of an inner tube 7a and an outer tube 7b, a gas to be treated is introduced through one of the inner tube or outer tube into a cylindrical shell tube-type heat exchanger 5 and then into the reactor. After reaction, the reacted gas, again passing through the cylindrical shell tube-type heat exchanger 5, is discharged through the other tube in the double piping 7. Preferably, the gas to be treated is introduced through the inner tube 7a, and the gas after reaction is discharged through the outer tube 7b.

The gas to be treated, which enters from the center part of the cylindrical heat exchanger 5, flows toward the outside of the cylinder through the flow path partitioned by baffles 10 in the shell, and again flows to the center part. In Fig. 1, the arrow shows the flow of gas. By repeating this gas flow within the heat exchanger 5, in Fig. 1, the gas to be treated gradually goes up in a zigzag flow within the heat exchanger 5 toward the reactor 1. At this time, since the gas before treatment (gas to be treated) comes into contact with a wall surface of a small caliber straight tube 12 in which the high-temperatured gas after heat-treated by a heater 2 in the reactor 1 flows, heat is gradually exchanged between the gases before and after the treatment until the gas before treatment (gas to be treated) flowing zigzag reaches the reactor 1.

The gas before treatment (gas to be treated), which flows zigzag from side to center through a flow-path partitioned by baffles 10 in the shell and undergoes heat-exchange, then moves toward the reactor 1 through a flow port 8 present between the heat exchanger 5 and the reactor 1. The gas, which is further heated while flowing through the space between the heater 2 present on the reactor 1 and the outer casing 6 (the space in the outer side of the reactor 1), enters into the reactor 1 from the punching metal plate 3 present on the ceiling part of the reactor 1, to be reaction-treated by solid catalyst or reactive agent 11 previously filled in the reactor 1. The gas after treated outgoing from the reactor 1 flows down toward the vertical bottom through the tube 12 in the heat exchanger 5 and during this flow, is heat-exchanged with the gas before treatment as described above. After the temperature is lowered, the gas enters into the outer tube 7b of the double piping 7, heat-exchanged with the gas before treatment (gas to be treated) flowing in the inner tube 7a, and then discharged out of the system.

By using the reaction apparatus of the present invention, heat exchange can be efficiently performed between gases before and after treatment due to the above-described flow of treated gas, so that, for example, the catalyst layer filled in the reactor 1 can be greatly improved in the temperature distribution in the treated gas flow direction as compared with conventional reactors, and the temperature difference in the catalyst layer can be kept to be 50°C or less.

Highly efficient heat exchange is essential so that the agent (catalyst) filled in the reactor 1 can keep a temperature difference of 50°C or less uniformly in the temperature distribution in the flow direction, but more efficient heat exchange can be realized by using the reaction apparatus of the present invention, and the reasons for this include, for example:
(i) the gas to be treated can be previously heat-exchanged in the double piping 7 before the gas is introduced into the heat exchanger 5 and the reactor 1,
(ii) the heat exchanger 5 and the reactor 1 are integrated and therefore, heat exchange between gases before and after the reaction (treatment) in the reactor 1 proceeds smoothly and efficiently, and
(iii) the reactor 1 has a heater 2 and the gas to be treated can be contacted directly with the heater 2 before the gas is introduced into the reactor 1, so that the gas to be treated, with the temperature of the gas being close to the temperature set in the reactor 1, can be introduced into the reactor 1.

The reactor 1 preferably has fins 13 in the inside thereof in order to increase the heat conducting region, and fins 13 placed toward the center part in the reactor contribute to making more uniform the temperature of the reactive agent or catalyst filling the reactor 1. In particular, the effect is larger when the diameter of the reactor is larger than 10 cm, though this varies depending on the conditions used.

The double piping 7 consists of an inner tube 7a and an outer tube 7b. The double piping structure is a very important factor not only for merely elevating the heat efficiency but also for saving space in the periphery of the reactor, for example, a preheater or the like for performing the preheating can be dispensed with.

Fins are preferably provided between the inner tube 7a and the outer tube 7b so that the heat exchange efficiency can be more elevated.

In the outer tube 7b of the double pining 7, where the gas after treatment flows, a heat radiating plate is preferably placed so that the heat release efficiency can be elevated and the temperature of the gas discharged out of the system can be more lowered.

According to the reaction apparatus of the present invention, the temperature distribution in the reactor can be made uniform, so that the objective temperature of the catalyst or reactive agent filling the reactor can be selected over a wide range and this can lead to improvement in efficient use of catalyst or reactive agent, elevation of the reaction ratio and reduction of costs.

At the vertical bottom of the integrated structure of which a heat exchanger 5 is connected to the lower part of the reactor 1 which has a heater 2, an outer casing 6 having a flange 4 is provided, so that the reactor 1 is laid apart from the flange 4 and heating at the flange 4 can be suppressed. For instance, even when the reaction temperature is as high as 450°C, the flange 4 can be kept at a temperature of 100°C or less.

In conventional apparatuses, the flange near the reaction part is baked problematically, however, such a problem can be prevented by using the heat exchanger-integrated reaction apparatus of the present invention. Accordingly, a special sealing material (packing) such as carbon and metal packing is not necessary and a low-temperature sealing material (packing) usually usable at a temperature of around 100°C, such as O-ring of Viton (product name, manufactured by DuPont Dow Elastomers L.L.C.), can be used.

The reaction apparatus of the present invention, wherein the outer casing 6 has the flange 4 at the bottom, is advantageous not only in that a low-temperature sealing material can be selected but also in that the heat insulating material for fixing to the outer casing can be smoothly attached or removed and therefore, resulting in easy maintenance. Furthermore, the outer casing 6 can be disengaged from the reactor 1 integrated with the heat exchanger 5 by screwing an eyebolt into an eyebolt fixing part 9 which is provided in the ceiling part of the outer casing 6 integrated with the ceiling part, whereby the reactive agent or the catalyst can be smoothly exchanged.

The temperature on use of the reactor 1 having a heater can be set to a range from 50 to 700°C and is preferably from 100 to 500°C, more preferably from 250 to 450°C, however, this temperature can be appropriately selected according to the kind of reaction.

The catalyst or reactive agent (filler) to fill the reactor 1 can be freely selected according to the kind of reaction and is not particularly limited. The amount of the filler, and the length or diameter of the reactor and heat exchanger are not particularly limited and can be freely selected according to the reaction conditions. In order to make uniform the temperature in the center part of the agent filling the reactor 1, fins provided for transferring heat from the portion having a heater toward the center of the reactor 1 contribute to making the temperature distribution uniform. The number of fins and the length thereof are not particularly limited and these can be freely selected according to the reaction conditions.

The reaction method of the present invention is characterized by passing a gas to be treated sequentially into one of an inner tube 7a and an outer tube 7b in a double piping 7, a heat exchanger 5, a reactor 1 with a heater 2, the heat exchanger 5 and the other tube of the inner tube 7a and the outer tube 7b in the double piping 7, and heating the gas to be treated by the heater 2 before the gas to be treated is introduced into the reactor 1, thereby adjusting the temperature difference in the gas flow direction inside the reactor.

According to the reaction method of the present invention, the temperature difference in the temperature distribution with respect to the gas flow direction in the layer filled with catalyst/reactive agent in the reactor can be uniformly kept to be 50°C or less. Therefore, the reaction method of the present invention can be used for various decomposition reactions and synthesis reactions where the reaction temperature needs to be controlled to be uniform.

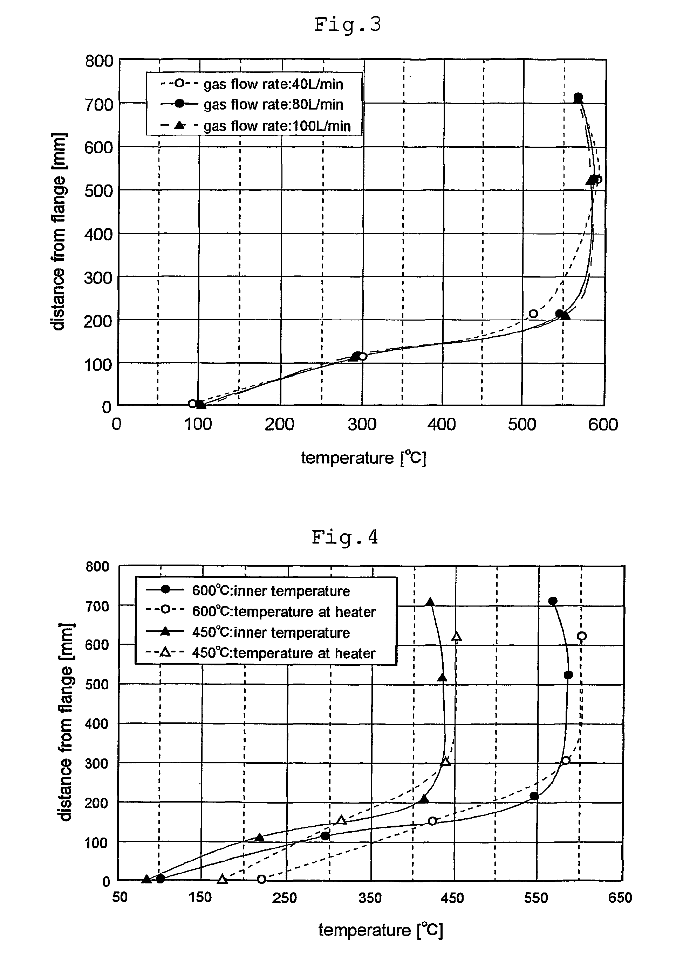

Fig. 3 shows the results in the measurement of the temperature distribution inside the reactor by changing the amount of gas while setting the heater at a constant temperature, when the reaction apparatus of the present invention shown in Fig. 1 was used. In the apparatus, the distance from the flange 4 to the punching metal plate 3a at the lower part of the reactor 1 was approximately 190 mm, the portion above the punching metal plate 3a was filled with alumina carrier. In the 40L heat exchanger-integrated reaction apparatus (outer diameter:300 mmΦ), having plural fins 13 in the reactor, a mixture of alumina and calcium carbonate as a solid reactive agent 11 was filled, the heater was set at a constant temperature of 600°C, the flow rate of N₂ gas was changed to 40, 80 and 100 L/min, and the temperature distribution in the vertical direction inside the reactor was measured assuming that the flange part at the bottom of the outer casing was the 0 mm point. The temperature (inside temperature) was measured at the horizontal center part of the reactor. As seen in Fig. 3, the temperature distribution in the vertical direction inside the reactor was uniform at each flow rate.

Fig. 4 shows the results in the measurement of the temperature distribution inside the reactor by changing the heater temperature while keeping constant the amount of gas using. As in the case of Fig. 3, the reaction apparatus of the present invention shown in Fig. 1 was used, where the distance from the flange to the reactor is about 190 mm and the agent is filled in the portion above. The temperature (inside temperature) was measured at the horizontal center part of the reactor. In the reaction apparatus, a reactive agent was filled, the flow rate of N₂ gas was constantly 80 L/min, the temperature of the heater was changed to 450°C and 600°C, and the temperature distribution in the vertical direction inside the reactor was measured assuming that the flange part at the bottom of the outer casing was the 0 mm point. As seen in Fig. 4, the temperature distribution in the vertical direction inside the reactor was uniform.

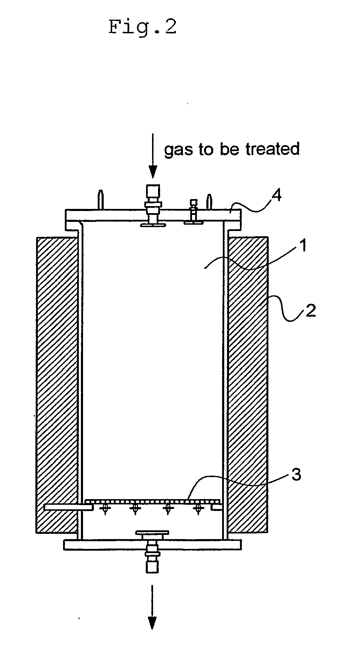

For comparison, with respect to a conventional reaction apparatus for 40 L having an externally heating system as shown by Fig. 2, measurement on temperature distribution was conducted. The reaction apparatus of Fig. 2 is roughly constructed with a reactor 1, a heater 2, a punching metal plate 3 and a flange 4.

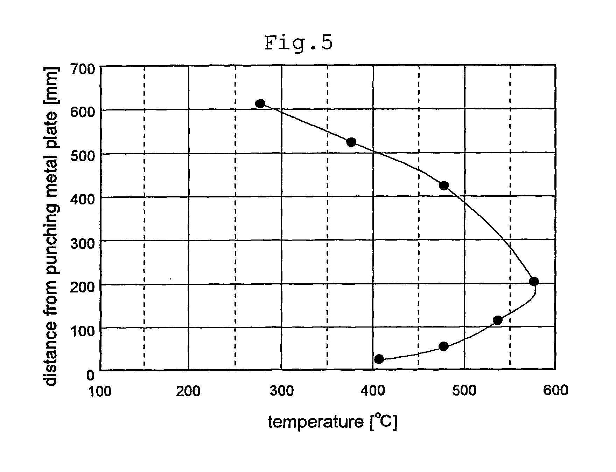

Fig. 5 shows the results in the measurement of temperature distribution inside the reactor when a reactive agent was filled, the heater temperature was set to 600°C, a flowing gas heated to 500°C in a preheater was passed at an N₂ gas flow rate of 80 L/min, assuming that the punching metal plate 3 at the bottom part of the reactor was the 0 mm point. The temperature distribution was determined by measuring the temperature at the horizontal center part of the reactor. The obtained temperature distribution in the reactor turned out to be a general temperature distribution where a maximum value appeared in the vicinity of about 200 mm from the punching metal plate 3a and the inlet and outlet temperatures were low.

### INDUSTRIAL APPLICABILITY

The present invention provides an apparatus comprising a structure where a shell and tube-type heat exchanger and a reactor on which a heater is present are integrated and the piping for flowing a gas through in the reaction apparatus has a double piping structure consisting of an inner tube and an outer tube for passing the gases before treatment and after treatment in the countercurrent flow.

By using the apparatus of the present invention, the heat exchange efficiency is elevated. In addition, the reactor on which a heater is present is useful for the temperature distribution in the gas flow direction inside the reactor to be made uniform. The catalyst or reactive agent filling the reactor can be kept at the objective temperature over a wide area and the catalyst can be effectively used in catalytic reactions where temperature control is desirable. Furthermore, since a heat exchanger and a reactor on which a heater is present are integrated and the piping for flowing a gas through in the reaction apparatus has a double piping structure consisting of an inner tube and an outer tube for passing the gases before treatment and after treatment in the countercurrent flow, the reaction apparatus can be downsized and the space in the periphery of the reaction apparatus can be saved.

## Claims

1. A reaction apparatus comprising a heat exchanger 5 and a reactor 1 on which a heater 2 is present, which are enclosed in an outer casing 6, the top of the heat exchanger 5 being connected to the reactor 1, the other end part of the heat exchanger 5 and the bottom of the outer casing 6 being fixed to each other by a flange 4, and a double piping 7 for introducing a gas to be treated and discharging the treated gas being connected to the other end part of the heat exchanger 5, such that the gas passes through the heat exchanger 5, the reactor 1 and the heat exchanger 5 in this order during the process from introducing gas through one of the inner tube and the outer tube in the double piping to discharging the gas through the other tube.

2. The reaction apparatus as claimed in claim 1, wherein the heat exchanger 5 is a shell and tube-type heat exchanger.

3. The reaction apparatus as claimed in claim 1, wherein the outer casing 6 has an eyebolt fixing part 9 on the ceiling part, thereby the outer casing 6 is detachable.

4. The reaction apparatus as claimed in claim 1, wherein the reactor 1 has fins 13 in the inside thereof.

5. The reaction apparatus as claimed in claim 1, wherein the fins 13 are provided inside the inner tube 7a in the double piping 7 and/or between the inner tube 7a and the outer tube 7b in the double piping 7.

6. The reaction apparatus as claimed in claim 1, comprising a mechanism where the gas to be treated is introduced through the inner tube 7a and discharged through the outer tube 7b.

7. The reaction apparatus as claimed in claim 6, wherein the outer tube 7b of the double piping 7 has a heat radiating plate.

8. A reaction method comprising passing a gas to be treated sequentially into one tube of the inner tube 7a and the outer tube 7b in a double piping 7, a heat exchanger 5, a reactor 1 with a heater 2, the heat exchanger 5 and the other tube in the double piping 7 in this order and heating the gas to be treated by the heater 2 before the gas to be treated is introduced into the reactor 1, thereby adjusting the temperature difference in the gas flow direction inside the reactor 1.

9. The reaction method as claimed in claim 8, wherein the gas to be treated is introduced through the inner tube 7a of the double piping 7 and discharged through the outer tube 7b.

## Patentansprüche

1. Reaktionsapparatur mit einem Wärmetauscher 5 und einem Reaktor 1, auf welchem sich eine Heizvorrichtung 2 befindet, welche von einem äußeren Gehäuse 6 umgeben sind, wobei der obere Teil des Wärmetauschers 5 mit dem Reaktor 1 verbunden ist, der Bereich des anderen Endes des Wärmetauschers 5 und der untere Teil des äußeren Gehäuses 6 mittels eines Flanschs 4 aneinander befestigt sind, und eine Doppelleitung 7 zum Einführen eines zu behandelnden Gases und zum Abführen des behandelten Gases mit dem Bereich des anderen Endes des Wärmetauschers 5 derart verbunden ist, dass das Gas, während des Prozesses ab dem Einführen des Gases durch das innere Rohr oder das äußere Rohr in die Doppelleitung bis zum Abführen des Gases durch das andere Rohr, durch den Wärmetauscher 5, den Reaktor 1 und den Wärmetauscher 5 in dieser Reihenfolge strömt.

2. Reaktionsapparatur nach Anspruch 1, worin der Wärmetauscher 5 ein Wärmetauscher vom Typ "Mantel und Rohr" ist.

3. Reaktionsapparatur nach Anspruch 1, wobei das äußere Gehäuse 6 einen Augbolzenbefestigungsteil 9 am Deckenbereich aufweist, wodurch das äußere Gehäuse 6 abnehmbar ist.

4. Reaktionsapparatur nach Anspruch 1, worin der Reaktor an seiner Innenseite Lamellen 13 aufweist.

5. Reaktionsapparatur nach Anspruch 1, worin die Lamellen 13 auf der Innenseite des inneren Rohrs 7a in der Doppelleitung 7 und/oder zwischen dem inneren Rohr 7a und dem äußeren Rohr 7b in der Doppelleitung 7 vorgesehen sind.

6. Reaktionsapparatur nach Anspruch 1 mit einem Mechanismus, wo das zu behandelnde Gas durch das innere Rohr 7a eingeführt und durch das äußere Rohr 7b abgeführt wird.

7. Reaktionsapparatur nach Anspruch 6, wobei das äußere Rohr 7b der Doppelleitung 7 eine Wärmestrahlungsplatte aufweist.

8. Reaktionsverfahren, umfassend das Führen eines zu behandelnden Gases nacheinander in das innere Rohr 7a oder das äußere Rohr 7b in einer Doppelleitung 7, einen Wärmetauscher 5, einen Reaktor 1 mit einer Heizvorrichtung 2, den Wärmetauscher 5 und das andere Rohr in der Doppelleitung 7 in dieser Reihenfolge, und Erhitzen des zu behandelnden Gases mittels der Heizvorrichtung 2, bevor das zu behandelnde Gas in den Reaktor 1 eingeführt wird, wodurch die Temperaturdifferenz in der Gasströmungsrichtung innerhalb des Reaktors 1 eingestellt wird.

9. Reaktionsverfahren nach Anspruch 8, wobei das zu behandelnde Gas durch das innere Rohr 7a der Doppelleitung 7 eingeführt und durch das äußere Rohr 7b abgeführt wird.

## Revendications

1. Appareil de réaction comprenant un échangeur de chaleur 5 et un réacteur 1 sur lequel un dispositif de chauffage 2 est présent, qui sont enfermés dans un boîtier externe 6, la partie supérieure de l'échangeur de chaleur 5 étant raccordée au réacteur 1, l'autre partie d'extrémité de l'échangeur de chaleur 5 et le fond du boîtier externe 6 étant fixés entre eux par un rebord 4, et un double tuyau 7 pour introduire un gaz à traiter et décharger le gaz traité qui est raccordé à l'autre partie d'extrémité de l'échangeur de chaleur 5, de sorte que le gaz passe par l'échangeur de chaleur 5, le réacteur 1 et l'échangeur de chaleur 5, dans cet ordre pendant le procédé pour introduire les gaz par l'un parmi le tube interne et le tube externe dans le double tuyau pour décharger les gaz par l'autre tube.

2. Appareil de réaction selon la revendication 1, dans lequel l'échangeur de chaleur 5 est un échangeur de chaleur à calandre.

3. Appareil de réaction selon la revendication 1, dans lequel le boîtier externe 6 a une partie de fixation de boulon à oeil 9 sur la partie de plafond, ainsi le boîtier externe 6 est détachable.

4. Appareil de réaction selon la revendication 1, dans lequel le réacteur 1 a des ailettes 13 dans son intérieur.

5. Appareil de réaction selon-la revendication 1, dans lequel les ailettes 13 sont prévues à l'intérieur du tube interne 7a dans le double tuyau 7 et/ou entre le tube interne 7a et le tube externe 7b dans le double tuyau 7.

6. Appareil de réaction selon la revendication 1, comprenant un mécanisme où le gaz à traiter est introduit par le tube interne 7a et déchargé par le tube externe 7b.

7. Appareil de réaction selon la revendication 6, dans lequel le tube externe 7b du double tuyau 7 a une plaque de diffusion de chaleur.

8. Procédé de réaction comprenant les étapes consistant à faire passer un gaz à traiter de manière séquentielle dans un tube du tube interne 7a et du tube externe 7b dans un double tuyau 7, un échangeur de chaleur 5, un réacteur 1 avec un dispositif de chauffage 2, l'échangeur de chaleur 5 et l'autre tube dans le double tuyau 7, dans cet ordre et chauffer le gaz à traiter par le dispositif de chauffage 2 avant que le gaz à traiter ne soit introduit dans le réacteur 1, ajustant ainsi la différence de température dans la direction de l'écoulement du gaz à l'intérieur du réacteur 1.

9. Procédé de réaction selon la revendication 8, dans lequel le gaz à traiter est introduit par le tube interne 7a du double tuyau 7 et déchargé par le tube externe 7b.
